# EUROPEAN PATENT APPLICATION

(11) **EP 1 489 760 A1**
(43) Date of publication of application: **22.12.2004**
(21) Application number: 03745000.4
(22) Date of filing: 20.03.2003
(51) Int. Cl.: H04B 7/26, H04Q 7/30

(54) **BASE STATION APPARATUS AND SECTOR CONTROL METHOD**

(30) Priority: 22.03.2002 JP 2002080993; 26.03.2002 JP 2002086114
(71) Applicant: MATSUSHITA ELECTRIC INDUSTRIAL CO., LTD., Kadoma-shi, Osaka 571-8501 (JP)
(72) Inventor: HAYASHI, Toshiteru, Yokosuka-shi, Kanagawa 239-0841 (JP); MIYA, Kazuyuki, Setagaya-Ku, Tokyo 156-0052 (JP)
(74) Representative: Grünecker, Kinkeldey, Stockmair & Schwanhäusser Anwaltssozietät
(86) International application number: PCT/JP2003/003394
(87) International publication number: WO 2003/081809

(57) **Abstract**

The direction of arrival detection section 116 detects the direction of arrival of signals transmitted from various mobile stations based on information output from the reception processing section 113. The traffic detection section 115 detects traffic of the respective mobile stations based on information output from the direction of arrival detection section 116. The sector control section 117 controls the switching sections 102 and 108, spreading section 111 and despreading section 104 so that sectors are rotatedbasedon information output from the traffic detection section 115. This makes it possible to reduce communication load in a handover area between sectors and increase the channel capacity of the system.

## Description

### Technical Field

The present invention relates to a base station apparatus and a sector control method.

### Background Art

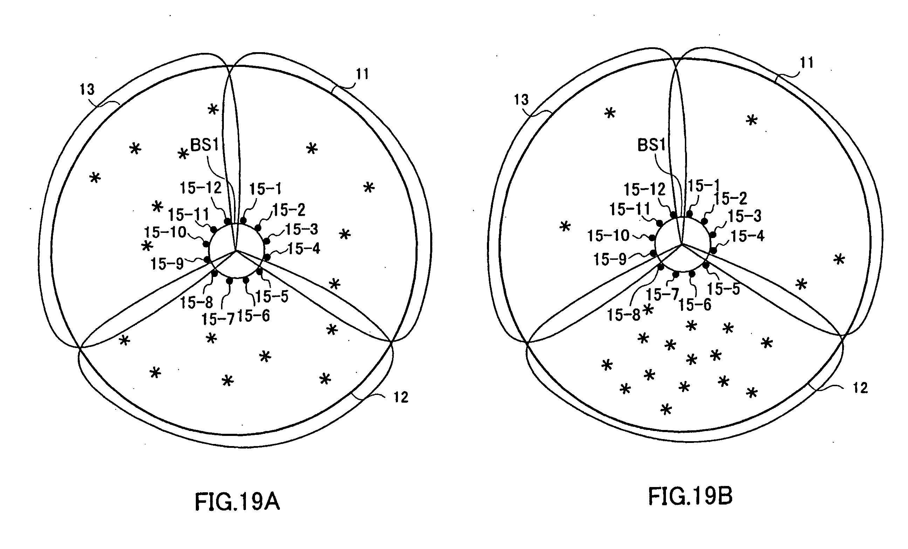

As shown in FIG.19A, a CDMA (Code Division Multiple Access) system generally adopts a scheme consisting of a cellular scheme base station BS1 covering a cell which is divided into a plurality of fan-shaped zones (sectors 11 to 13) and a plurality of directional antennas in charge of each sector arranged in each sector (antennas 15-1 to 15-12 in the figure).

According to this scheme, signals sent from the antennas cause little interference with sectors located in directions other than their directivities, interference signals arriving from mobile stations in directions other than their directivities can also be removed and improvement of channel capacity in a communication system can also be expected.

However, as shown in FIG.19B when mobile stations in the middle of communication are densely located (concentrated) only in sector 12, only the amount of communication (traffic) in this sector increases, and therefore the load on the communication system increases. This results in a problem that it is not possible to efficiently use resources of the base station and the channel capacity of the system is restricted.

Furthermore, since many mobile stations exist within the same directional beam formed by the antennas in charge of the sector 12 at this time, influences of mutual interference caused by received signals increase, which also reduces the transmission/reception performance of the mobile stations.

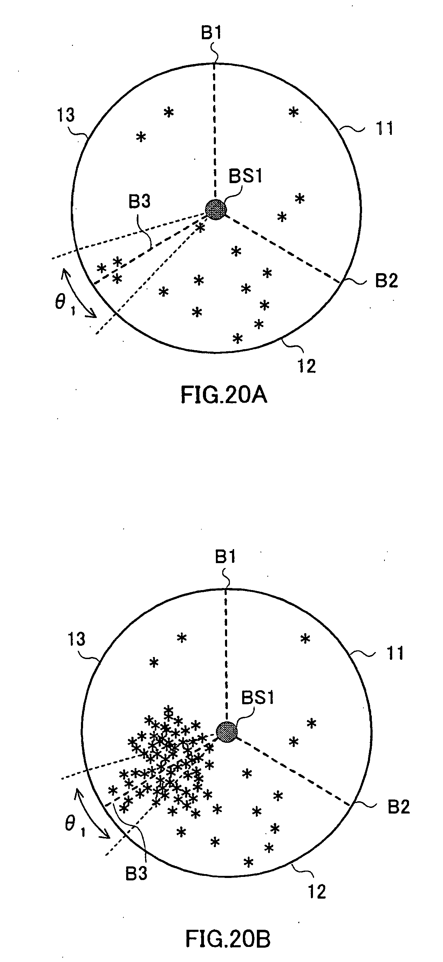

Furthermore, as shown in FIG.20A, in areas near the boundaries between adjacent sectors (hereinafter referred to as "sector boundary") B1 to B3 (e.g., range of angle θ1 in sector boundary B3), the mobile stations carry out handover (or softer handover; SHO) between sectors where they communicate with a plurality of sectors simultaneously by setting a plurality of communication channels. This SHO has the effect of allowing the mobile station to maintain a handover state with a plurality of sectors whenever possible and continue communication even when a channel condition with one site (sector) deteriorates by maintaining the communication using another channel, and even when the mobile station moves from one sector to another it can maintain the communication state without interrupting the communication, and therefore SHO allows the mobile station to secure a stable communication state.

However, as shown in FIG.20B, when many mobile stations in the middle of communication are concentrated on an area in the vicinity of a sector boundary (hereinafter referred to as "SHO area"), there are many targets for SHO control, which increases the load on the base station of control processing for SHO and position registration, causing a shortage of resources of the communication system. Moreover, since a plurality of sectors carry out transmission to the same mobile station, transmit power increases and the system capacity reduces as well. Furthermore, signals are sent from a plurality of sectors to the same mobile station, which increases interference on the downlink and control for sector monitoring for SHO control is performed frequently, which results in another problem that the load on the communication system increases.

### Disclosure of Invention

It is an object of the present invention to efficiently use resources of the base station and increase the channel capacity of the system even if the load on the communication system is distributed non-uniformly in a cell.

This object can be attained by the base station apparatus changing a combination between circuits which process signals of communication with various mobile stations and antennas in charge of these circuits based on results of measurement of traffic of communication channels with the mobile stations or changing the combination between the antennas and mobile stations covered by the respective antennas and controlling each sector in the cell.

According to an aspect of the present invention, when there are many mobile stations in the middle of communication in an area where a mobile station carries out SHO, that is, in the vicinity of a boundary between sectors in the same cell, the directivity of the antenna of the base station is changed so that the number of mobile stations in the SHO is decreased by changing the position of the sector boundary.

According to another aspect of the present invention, a distribution of load on the communication system in each sector is detected and the locations of antenna elements are controlled based on the detection result.

The method of forming sectors is roughly divided into a method of changing antenna directivities in such a way that the area of a sector is not changed but only the position of the sector is changed (hereinafter referred to as "sector rotation") and a method of changing antenna directivities by moving sector boundaries (hereinafter referred to as "sector boundary movement") in such a way that the area of each sector is expanded or reduced. On the other hand, as the method of changing antenna directivities, there are a method of changing the positions of antenna elements themselves and a method of changing weights in controlling an adaptive array antenna (hereinafter abbreviated as "AAA").

### Brief Description of Drawings

FIG.1 is a block diagram showing an example of a configuration of a base station apparatus according to Embodiment 1 of the present invention;
FIG.2 is a flow chart showing operation procedures of a direction of arrival detection section, a traffic detection section, a sector control section and a switching section according to Embodiment 1 of the present invention;
FIG. 3A and FIG.3B illustrate an example of a sector configuration of a cell controlled by the base station apparatus according to Embodiment 1 of the present invention;
FIG.4A illustrates a sector configuration corresponding to a clockwise sector rotation;
FIG.4B illustrates a sector configuration corresponding to a counterclockwise sector rotation;
FIG.5 is a block diagram showing another example of the configuration of the base station apparatus according to Embodiment 1 of the present invention;
FIG.6 is a block diagram showing an example of a configuration of a base station apparatus according to Embodiment 2 of the present invention;
FIG.7 is a flow chart illustrating an operation of the base station apparatus according to Embodiment 2 of the present invention;
FIG.8 illustrates a sector configuration of a cell controlled by the base station apparatus according to Embodiment 2 of the present invention;
FIG.9 is a block diagram showing an example of a configuration of a base station apparatus according to Embodiment 3 of the present invention;
FIG. 10 is a flow chart showing a procedure for moving sector boundaries of the base station apparatus according to Embodiment 3 of the present invention;
FIG.11 is a block diagram showing an example of a configuration of a base station apparatus according to Embodiment 4 of the present invention;
FIG.12A and FIG.12B illustrate an antenna configuration of a cell controlled by the base station apparatus according to Embodiment 4 of the present invention;
FIG.13 is a block diagram showing an example of a configuration of the base station apparatus according to Embodiment 4 of the present invention;
FIG.14 is a block diagram showing an example of a configuration of a base station apparatus according to Embodiment 5 of the present invention;
FIG.15A and FIG.15B illustrate an antenna configuration of the base station apparatus according to Embodiment 5 of the present invention;
FIG.16A, FIG.16B and FIG.16C illustrate a sector configuration of a cell controlled by the base station apparatus according to Embodiment 5 of the present invention;
FIG.17 is a block diagram showing an example of a configuration of a base station apparatus according to Embodiment 6 of the present invention;
FIG.18 illustrates an antenna configuration of the base station apparatus according to Embodiment 6 of the present invention;
FIG.19A and FIG.19B illustrate an antenna configuration of a cell controlled by a conventional base station apparatus; and
FIG.20A and FIG.20B illustrate a sector configuration of a cell controlled by the conventional base station apparatus.

### Best Mode for Carrying out the Invention

With reference now to the attached drawings, embodiments of the present invention will be explained in detail below.

### (Embodiment 1)

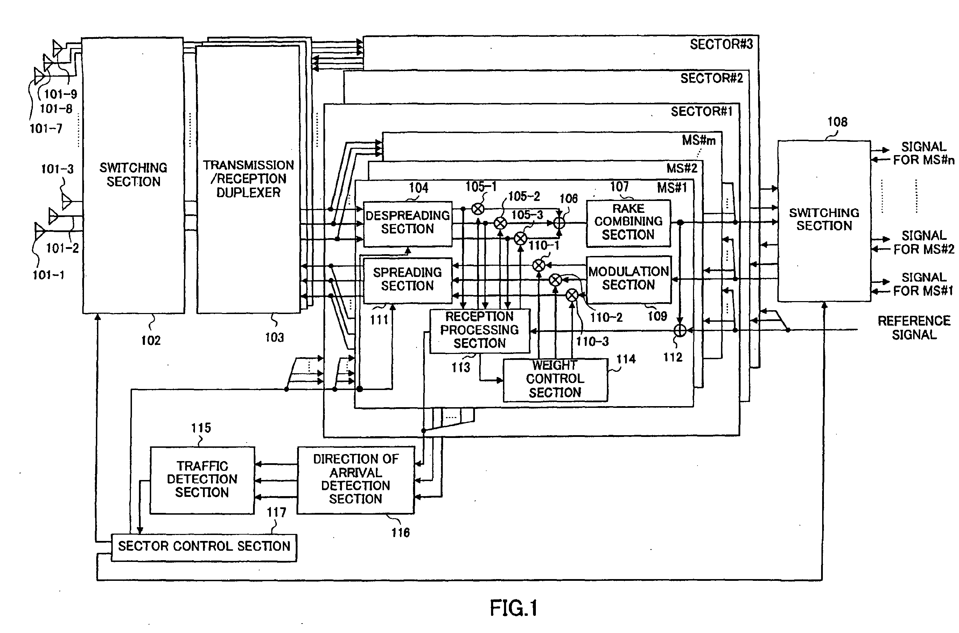

FIG.1 is a block diagram showing an example of a configuration of a base station apparatus according to Embodiment 1 of the present invention. This embodiment will describe a case where the number of sectors per 1 cell is 3, the number of antenna elements in charge of one sector is 3 and sector rotation is carried out by switching between antenna elements in charge of each sector as an example.

In FIG.1, antennas 101-1 to 101-9 are used to transmit or receive signals with directivity. A switching section 102 switches between signals received by the antennas 101-1 to 101-9 under the control of a sector control section 117 and outputs the signals to a transmission/reception duplexer 103 and at the same time outputs transmission signals output from the transmission/reception duplexer 103 to the antennas 101-1 to 101-9. The transmission/reception duplexer 103 performs radio reception processing (down-conversion, etc.) on the signal output from the switching section 102, outputs it to a despreading section 104, carries out predetermined radio reception processing (up-conversion, etc.) on a signal output from a spreading section 111 and outputs it to the switching section 102.

The despreading section 104 generates a spreading code instructed by the sector control section 117, carries out despreading processing on the signal output from the transmission/reception duplexer 103 and outputs it to multipliers 105-1 to 105-3. The multipliers 105-1 to 105-3 multiply the signal output from the despreading section 104 by weights of AAA control output from a reception processing section 113 and outputs the resulting signal to an adder 106. The adder 106 adds up the signals output from the multipliers 105-1 to 105-3 and outputs the resulting signal to a RAKE combining section 107. The RAKE combining section 107 RAKE-combines the signal output from the adder 106 and outputs the resulting signal to a switching section 108.

The switching section 108 switches between the outputs of the RAKE combining section 107 under the control of the sector control section 117, sends the output to an upper station and at the same time outputs a signal sent from the upper station to a modulation section 109.

The modulation section 109 modulates the signal output from the switching section 108 and outputs the modulated signal to the multipliers 110-1 to 110-3. The multipliers 110-1 to 110-3 multiply the signal output from the modulation section 109 by weights output from the weight control section 114 and outputs the weighted signal to the spreading section 111. The spreading section 111 generates a spreading code instructed from the sector control section 117, carries out spreading processing on the signals output from the multipliers 110-1 to 110-3 and outputs the resulting signals to the transmission/reception duplexer 103. An adder 112 adds up the received signal output from the RAKE combining section 107 and a reference signal, and thereby generates an error signal and outputs it to the reception processing section 113.

The reception processing section 113 calculates weights in AAA control based on the error signal generated from the adder 112 in such a way that a mean square error between the reference signal and received signal becomes a minimum and outputs the weights to the multipliers 105-1 to 105-3.

Here, the AAA control is a technology which uses a plurality of antenna elements, performs phase and amplitude control on a transmission/reception signal of each antenna and forms directions with large and small spatial gains. Through this technology, it is possible to increase gains in necessary directions and reduce interference in unnecessary directions. In this technology, antenna directivity patterns can be formed freely.

AAA reception (uplink) combines signals received through a plurality of antennas after changing their amplitudes and phases, thereby forms a beampattern having directivity in the direction of arrival of a desired signal and receives signals using this directive pattern. On the other hand, AAA transmission (downlink) sends signals using weights of transmission antennas having the same directivities as those generated based on weights of the reception antennas generated on the uplink.

As an algorithm for calculating weights, for example, an adaptive algorithm such as LMS algorithm and RLS algorithm can be used. In the present invention, the algorithm for calculating weights is not limited to this, but various adaptive algorithms can be used.

In the process of AAA control, the reception processing section 113 can decide whether each mobile station is in the middle of communication or not or in which direction each mobile station is located, and therefore it outputs information on this mobile station to a direction of arrival detection section 116. Furthermore, the calculated weights can also be used to calculate weights to be multiplied on a transmission signal, and therefore they are also output to the weight control section 114.

The weight control section 114 calculates weights to be multiplied on the transmission signal based on the weight output from the reception processing section 113. The weights calculated by the weight control section 114 are output to the respective multipliers 110-1 to 110-3.

However, in the above-described configuration, there are as many transmission/reception duplexers 103 as sectors and there are as many despreading sections 104, multipliers 105-1 to 105-3, 110-1 to 110-3, adders 106 and 112, RAKE combining sections 107, modulation sections 109, spreading sections 111, reception processing sections 113 and weight control sections 114 as mobile stations that can be accommodated in each sector.

The direction of arrival detection section 116 detects the direction of arrival of a signal sent from each mobile station based on the information output from the reception processing section 113. A traffic detection section 115 detects traffic of each mobile station based on the information output from the direction of arrival detection section 116. The sector control section 117 controls the switching sections 102 and 108, spreading section 111, and despreading section 104 so that sectors are rotated based on the information output from the traffic detection section 115. Details of the direction of arrival detection section 116, traffic detection section 115, sector control section 117, and switching sections 102 and 108 will be described later.

Next, the flow of signals transmitted/received through the base station apparatus in the above-described configuration will be explained.

Signals received by the antennas 101-1 to 101-9 are passed through the switching section 102, processed by the transmission/reception duplexer 103, despread by the despreading section 104, multiplied by weights output from the reception processing section 113, RAKE-combined by the RAKE combining section 107, passed through the switching section 108 and sent to the upper station.

A signal sent from the upper station is passed through the switching section 108, modulated by the modulation section 109, multiplied by a weight output from the weight control section 114, directivity formed, spread by the spreading section 111, processed by the transmission/reception duplexer 103, passed through the switching section 102 and sent from the antennas 101-1 to 101-9 to each mobile station.

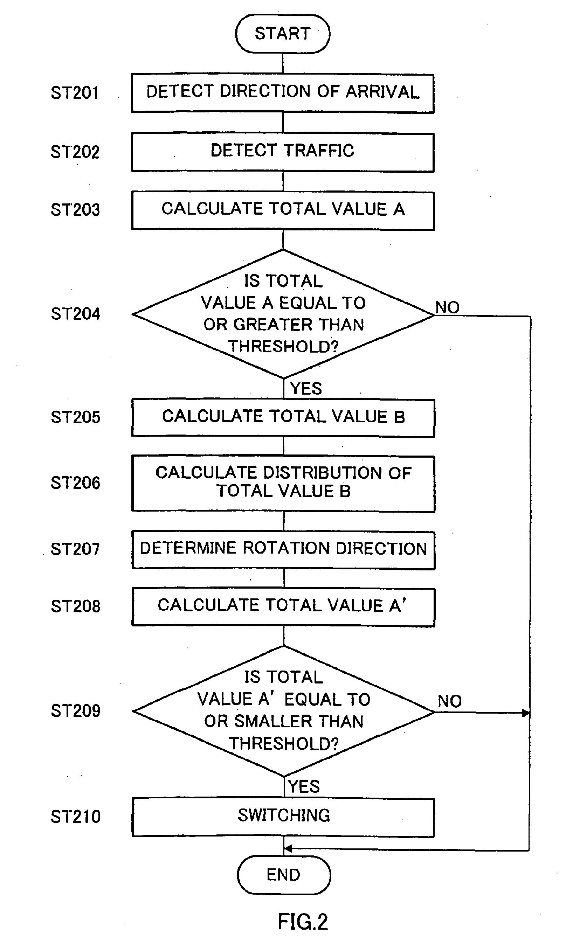

Then, the operations of the direction of arrival detection section 116, traffic detection section 115, sector control section 117 and switching sections 102 and 108 will be explained using the flow chart shown in FIG.2.

The direction of arrival detection section 116 detects the direction of arrival of a signal sent from each mobile station using the information on the mobile station output from the reception processing section 113 (ST201). The traffic detection section 115 detects traffic of each mobile station using the information output from the direction of arrival detection section 116 (ST202). The sector control section 117 calculates a total value A of the amount of traffic generated within the SHO area in the vicinity of a sector boundary based on the detection result output from the traffic detection section 115 for each sector boundary (ST203).

Then, in order to decide whether traffic is intense in each SHO are or not, the sector control section 117 compares the total value A of each sector boundary with a predetermined threshold (ST204). Then, at least any one of the total value A is equal to or greater than the predetermined threshold, the sector control section 117 calculates a total value B of the amount of traffic in a new sector in the case of executing a sector rotation (ST205). With regard to the direction of the sector rotation, two patterns can be considered in this embodiment; clockwise and counterclockwise as will be described later, and therefore the total value B is calculated for each pattern. The angle of sector rotation is an angle whereby it is possible to turn areas where traffic is intense away from the SHO area. Since this is a value which varies every time according to the amplitude of the area where traffic is intense, the rotation angle also increases when the area where traffic is intense is ample.

Then, the sector control section 117 calculates a variance of the three total values B calculated from the clockwise pattern and a variance of the three total values B calculated from the counterclockwise pattern (ST206). Then, the sector control section 117 compares the two variances and decides to rotate sectors according to the pattern having a smaller variance value (ST207).

However, when traffic is intense even in the SHO area in a new sector after the sector rotation, such a sector rotation is meaningless, and therefore processing is continued only when a total value A' of the amount of traffic which has occurred in the SHO area of the new sector is calculated beforehand (ST208) and it is not more than the threshold (ST209).

The sector control section 117 changes the correspondence between the antennas 101-1 to 101-9 and the circuits responsible for transmission/reception processing of communication signals in each sector (despreading section 104 to RAKE combining section 107, modulation section 109 to spreading section 111, etc.) and performs switching control on the switching sections 102 and 108 so that the sectors rotate in the rotation direction determined in ST207 (ST210).

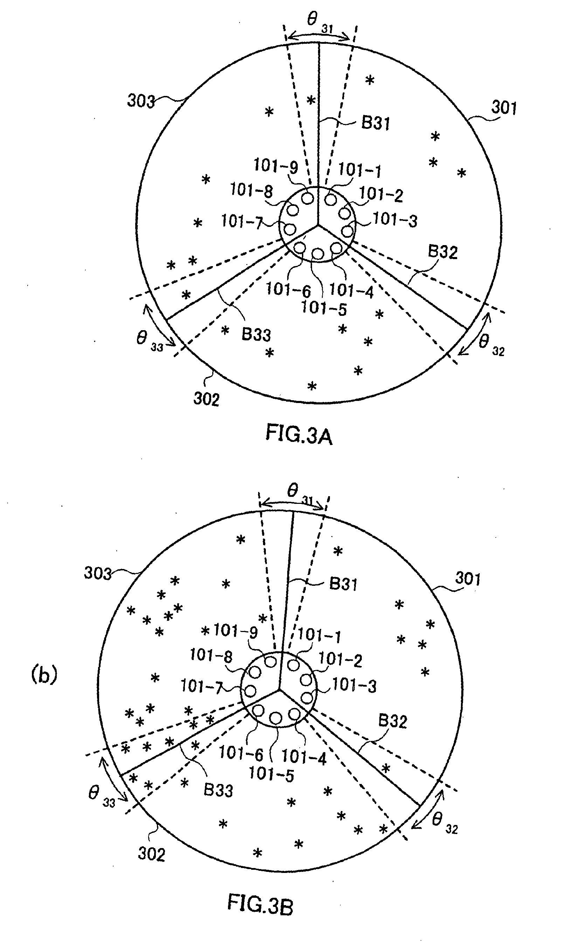

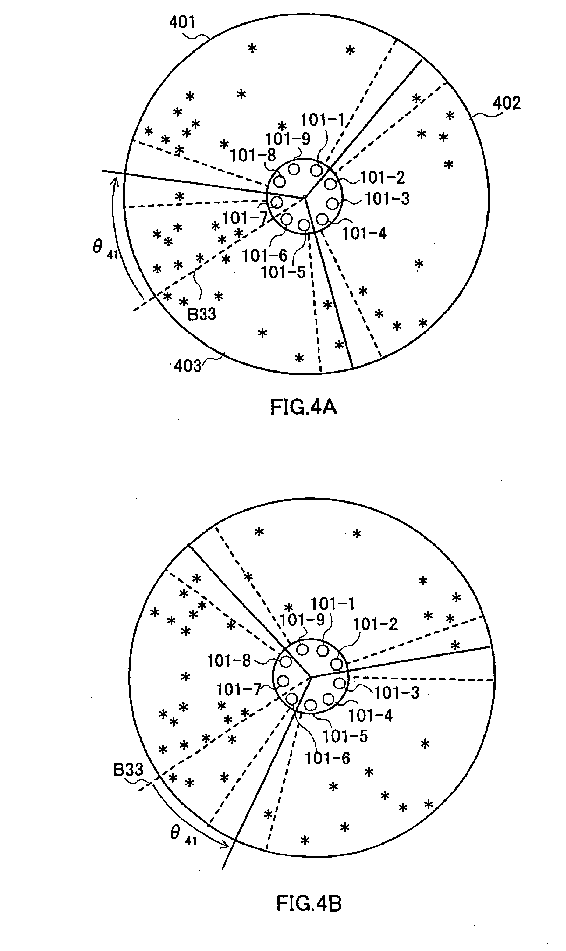

Then, the control by the switching section 102 of the sector control section 117 will be explained more specifically using FIG.3A, FIG.3B, FIG.4A and FIG.4B.

FIG.3A and FIG.3B show an example of a sector configuration of a cell controlled by the base station apparatus according to this embodiment. This cell includes three sectors; sector sandwiched by sector boundaries B31 and B32 (sector 301), sector sandwiched by sector boundaries B32 and B33 (sector 302) and sector sandwiched by sector boundaries B33 and B31 (sector 303), and areas in the ranges of angles θ ₃₁, θ ₃₂ and θ ₃₃ denote SHO areas and mark * denotes a mobile station in the middle of communication.

The antennas 101-1 to 101-9 in FIG.1 are arranged in a positional relationship shown in FIG.3A by the base station. As shown in FIG.3A, suppose the antennas 101-1 to 101-3 currently cover the sector 301, the antennas 101-4 to 101-6 cover the sector 302 and the antennas 101-7 to 101-9 cover the sector 303.

Then, as shown in FIG.3B, when traffic is intense in the SHO area in the vicinity of the sector boundary B33, the sector control section 117 controls the switching section 102 to rotate the sectors. There are two patters of rotation direction as shown in FIG.4A and FIG.4B.

FIG.4A illustrates the sector configuration when the sectors are rotated clockwise by angle θ ₄₁ from the state in FIG.3B and FIG.4B illustrates the sector configuration when the sectors are rotated counterclockwise by angle θ ₄₁. For example, in FIG.4A, the antennas 101-8, 101-9 and 101-1 cover the sector 401, the antennas 101-2 to 101-4 cover the sector 402 and the antennas 101-5 to 101-7 cover the sector 403.

While the number of mobile stations accommodated in each sector is 12, 10 and 18 in FIG.4A, it is 9, 9 and 22 in FIG.4B and it is understandable that rotating the sectors clockwise allows the respective sectors to accommodate mobile stations in a more balanced manner.

The sector control section 117 can determine the sector rotation direction in which mobile stations can be accommodated in each sector in a more balanced manner according to the procedure in ST203 to 207.

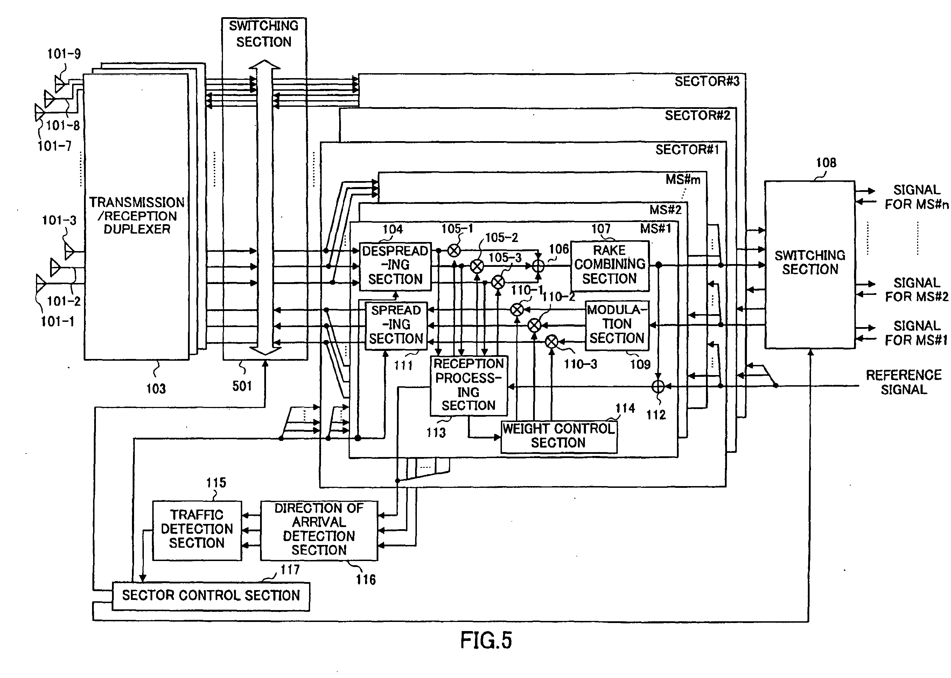

Here, a case where the switching section 102 is placed before the transmission/reception duplexer 103 and an analog signal before an A/D conversion is switched by a switch, etc., has been explained as an example, but as shown in FIG.5, it is also possible to place a switching section 501 which processes a digital signal after the A/D conversion after the transmission/reception duplexer 103 instead of the switching section 102.

The switching section 501 switches between input and output by changing addresses of an internal bus line under the instruction of the sector control section 117.

Furthermore, this embodiment has described the case where the direction of arrival detection section 116 detects the direction of arrival of a signal sent from each mobile station from the output of the reception processing section 113 as an example, but it is also possible to use a method of directly estimating the direction of arrival from the output of the despreading section 104 using a direction of arrival estimation technology.

Thus, according to this embodiment, sector boundaries are updated in such a way that the load on the communication system in SHO areas is reduced, and therefore it is possible to reduce the load on the communication system in the SHO areas. Therefore, it is possible for the base station to increase the channel capacity of the system, while it is possible for the mobile stations to reduce interference.

Here, the case where a sector rotation is realized by switching between antenna elements used for AAA control has been explained as an example. These antenna elements can be any antenna elements if they at least have directivity and are not limited to antennas involving AAA control.

Furthermore, this embodiment has described the case where a sector rotation is realized by switching between antenna elements used for each sector as an example, but it is also possible to realize sector rotation by changing weights in AAA using the same configuration.

When a sector rotation is realized by changing weights inAAA, the degree of freedom of the sector rotation increases, and therefore it is also possible to perform AAA control which rotates sectors in such a way that an area where traffic is more intense becomes the central position of the sector, that is, the position away from the sector boundaries. This prevents sector rotations from occurring frequently.

Furthermore, in this embodiment, if a sector is further divided into N virtual micro sectors, an amount of traffic is calculated for each virtual micro sector, a set of any N neighboring virtual micro sectors is considered as one sector, it is also possible to decide whether each sector can accommodate mobile stations most uniformly or not. Thus, it is also possible to adopt a configuration in which a sector rotation is realized based on this decision result.

### (Embodiment 2)

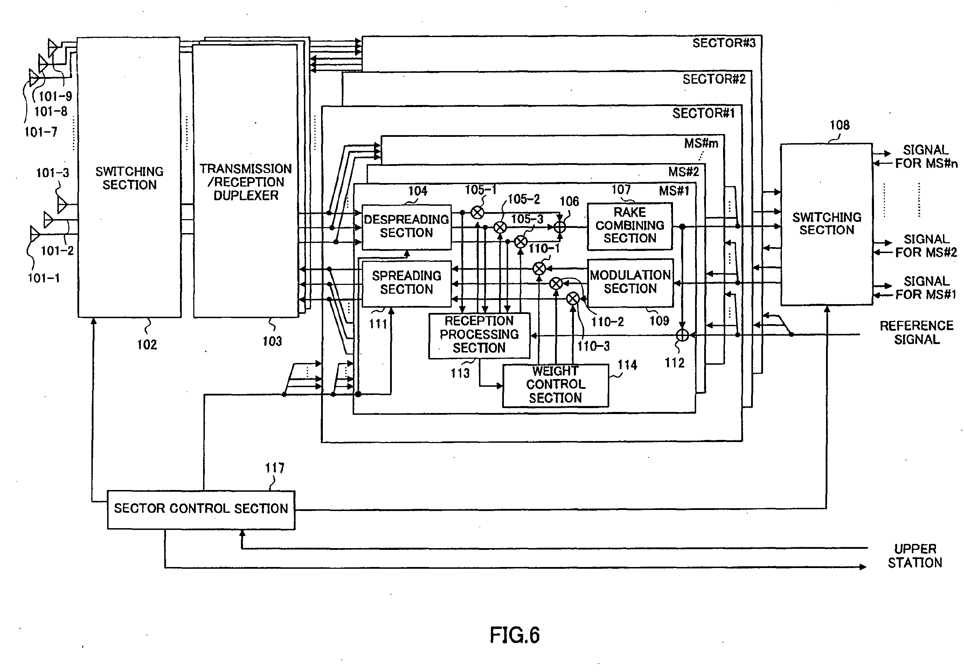

FIG.6 is a block diagram showing an example of a configuration of a base station apparatus according to Embodiment 2 of the present invention. This embodiment will describe a case where the number of sectors per 1 cell is 3, the number of antenna elements in charge of one sector is 3 and sector boundaries are moved by switching between antenna elements in charge of each sector as an example. This base station apparatus has the same basic configuration as that of the base station apparatus shown in FIG.1 and the same components are assigned the same reference numerals and explanations thereof will be omitted.

A feature of this embodiment is that an upper station supplies SHO control information to a sector control section 117 instead of the direction of arrival detection section 116 and traffic detection section 115 shown in FIG.1.

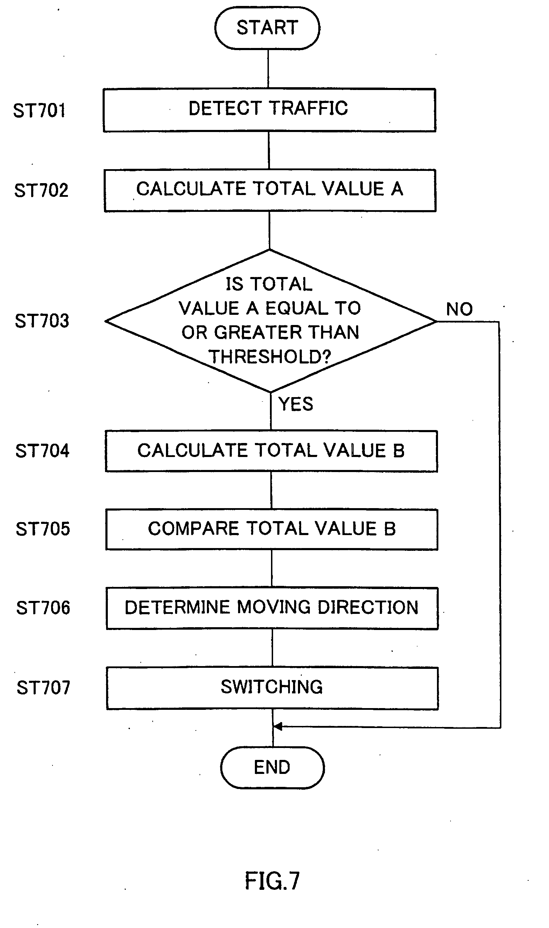

The operation of the base station apparatus in the above-described configuration will be explained using a flow chart in FIG.7.

The sector control section 117 detects traffic of each mobile station based on SHO control information supplied from an upper station, for example, an RNC (Radio Network Controller) which controls SHO (ST701). Then, the sector control section 117 calculates a total value A of amounts of traffic of mobile stations in the SHO area for each sector boundary (ST702). Then, in order to decide whether traffic is intense in each SHO area or not, the total value A of each sector boundary is compared with a predetermined threshold (ST703). When any of total values A calculated in ST703 is equal to or greater than the threshold, a total value B of the amount of traffic in two sectors adjacent to the SHO area corresponding to this total value A is calculated (ST704).

Then, the sector control section 117 compares the two total values B calculated in ST704 (ST705), decides to move the sector boundary in a direction in which the total value B is greater in such a way that the amount of traffic in a new sector after the movement of the sector boundary becomes more uniform (ST706) and informs its intension to move the sector boundary in this direction to the upper station. The upper station which has received this information instructs the switching section 102 through the sector control section 117 to move the sector boundary and the switching section 102 switches between antennas so that the sector boundary is moved by angle θ ₇₁ (ST707). This angle θ ₇₁ is an angle that enables the area where traffic is intense to be removed from the SHO area. Since it is a value which changes every time according to the amplitude of the area where traffic is intense, angle θ ₇₁ also increases in the case where the area where traffic is intense is ample.

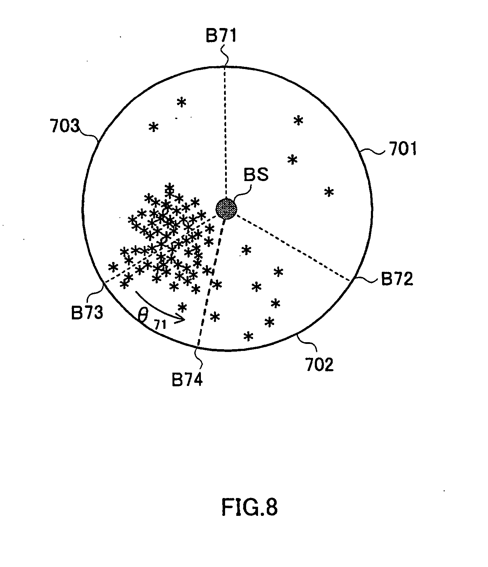

FIG.8 illustrates a sector configuration of a cell controlled by the base station apparatus according to this embodiment.

As shown in FIG.8, when intense traffic occurs focused on the vicinity of a sector boundary B73, it is possible to move the sector boundary to B74 through the above-described operation and perform adaptive control so that the sector boundaries do not overlap with one another in an area where traffic is intense. Furthermore, it is observed that sector boundaries are moved in the direction in which the movement of the sector boundaries will not result in an excessive number of mobile stations accommodated in 703.

Here, the case where the switching section 102 is set before the transmission/reception duplexer 103 and an analog signal before an A/D conversion is switched by a switch, etc., has been explained as an example, but as in the case of Embodiment 1, it is also possible to set a switching section 501 which processes a digital signal after the A/D conversion instead of the switching section 102 after the transmission/reception duplexer 103.

Furthermore, as shown in Embodiment 1, it is also possible to realize a sector rotation according to this embodiment.

Thus, according to this embodiment, it is possible to move boundaries between sectors so that the number of mobile stations in the middle of communication in the SHO area is reduced, reduce the number of mobile stations in the middle of communication in the SHO area and increase the channel capacity of the system.

### (Embodiment 3)

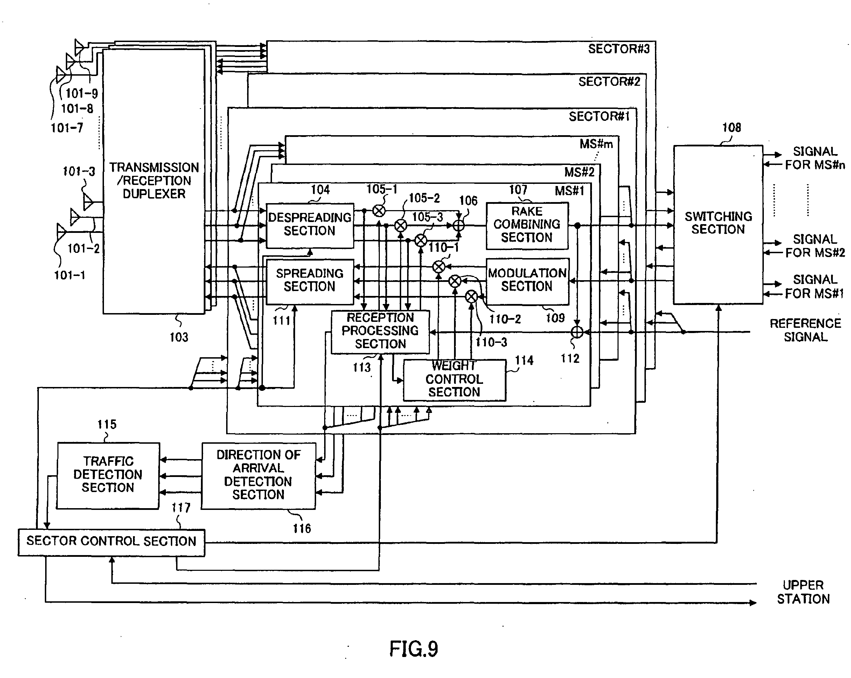

FIG.9 is a block diagram showing an example of a configuration of a base station apparatus according to Embodiment 3 of the present invention. This embodiment will describe a case where the number of sectors per 1 cell is 3 and a sector boundary is moved by controlling weights in AAA control as an example. This base station apparatus has the same basic configuration as that of the base station apparatus shown in FIG.1 and the same components are assigned the same reference numerals and explanations thereof will be omitted.

A feature of this embodiment is that a sector boundary is moved by combining Embodiment 1 and Embodiment 2 and controlling weights in AAA control without the switching section 102. This allows the correspondence between mobile stations and antennas 101-1 to 101-9.

Then, the operation of the base station apparatus in the above-described configuration will be explained.

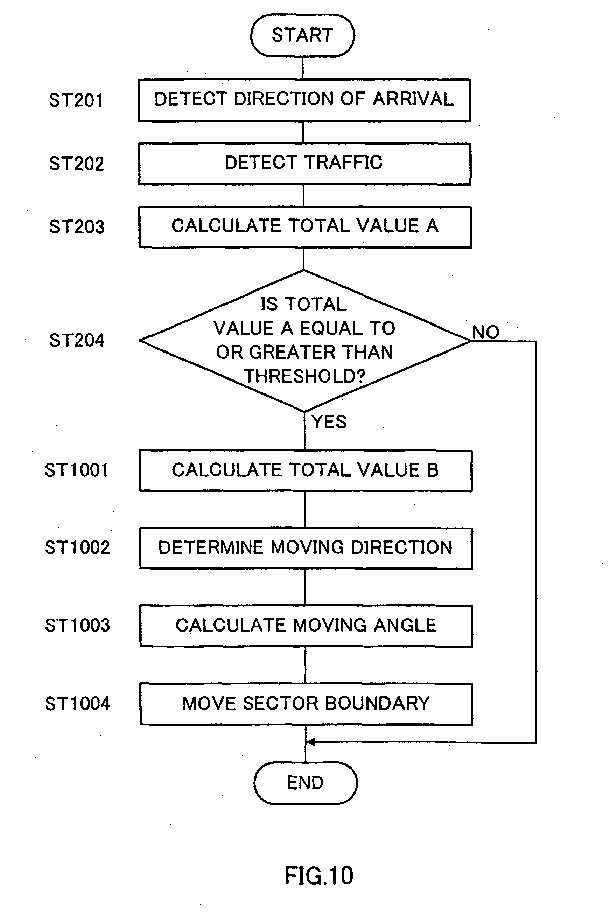

FIG.10 is a flow chart illustrating a procedure for moving a sector boundary of the base station apparatus according to this embodiment. This procedure is the same as the procedure shown in FIG.2 up to ST204, and so the same steps are assigned the same reference numerals and explanations thereof will be omitted.

When any of the total values A is equal to or greater than the threshold in ST204, the sector control section 117 calculates the respective total values B of the amount of traffic in the two adjacent sectors sandwiching the sector boundary corresponding to this total value A (ST1001). Then, in order to decide in which direction the sector boundary is moved; clockwise or counterclockwise, the two total values B are compared and the direction of the sector showing a greater value is decided to be the direction in which the sector boundary is moved (ST1002). Then, an angle for moving the sector boundary so as to remove an area where traffic is intense from the SHO area is calculated (ST1003). This value changes every time according to the amplitude of the area where traffic is intense and when this area is ample, the moving angle also increases. The sector control section 117 informs the upper station of its intention to move the sector boundary in the determined moving direction by the determined moving angle.

The upper station which has received the information issues an instruction to the sector control section 117 to move the sector boundary and the sector control section 117 causes a reception processing section 113 to calculate weights so as to move the sector boundary by the determined angle and change the directivity of the antenna (ST1004) .

The sector rotation described in Embodiment 1 can also be implemented in this embodiment.

Furthermore, this embodiment has described the case where the direction of arrival detection section 116 detects the direction of arrival of a signal sent from each mobile station from the output of the reception processing section 113 as an example, but it is also possible to use a method of directly estimating the direction of arrival from the output of the despreading section 104 using a direction of arrival estimation technology.

Thus, this embodiment moves a boundary between sectors so as to reduce the number of mobile stations in the middle of communication in an SHO area and controls directivities of antennas, and can thereby reduce the number of mobile stations in the middle of communication in the SHO area and increase the channel capacity of the system.

Furthermore, this embodiment subdivides a sector into N virtual micro sectors, calculates an amount of traffic for each virtual micro sector, and can thereby regard a set of neighboring N virtual micro sectors as one sector and decide whether it is possible for each sector to accommodate the mobile stations most uniformly or not. Therefore, this embodiment can also be adapted so as to move the sector boundary based on this decision result.

Embodiments 1 to 3 have described the case where the number of antenna elements of the base station apparatus according to the present invention is 9 as an example, but the number of antenna elements may also be 10 or more.

### (Embodiment 4)

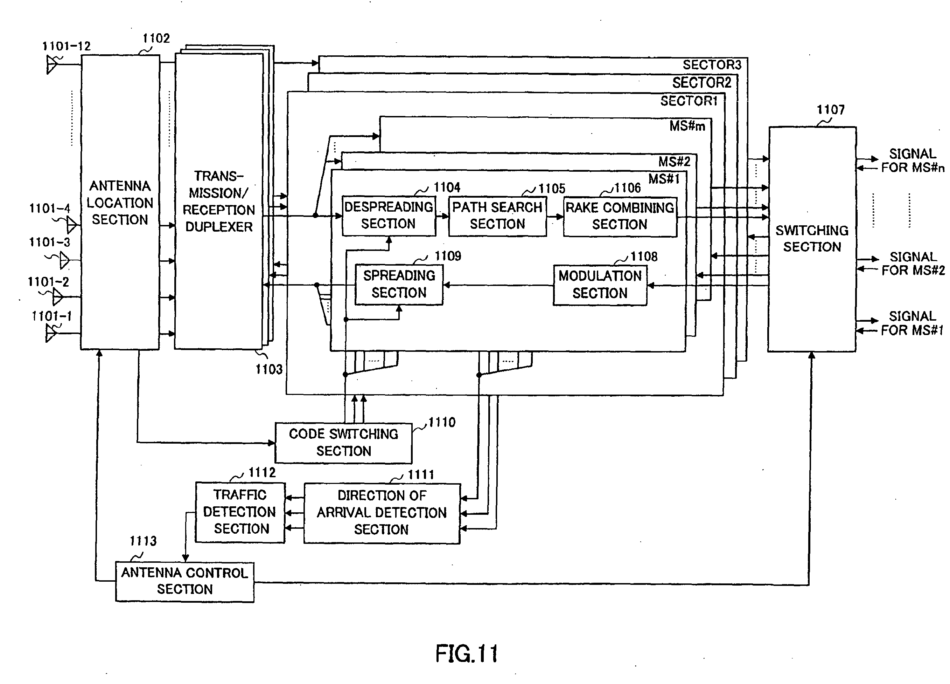

FIG.11 is a block diagram showing an example of a configuration of a base station apparatus according to Embodiment 4 of the present invention. Here, a case where the number of sectors per 1 cell is 3 will be explained as an example, but the present invention is not limited to this.

In FIG.11, antennas 1101-1 to 1101-12 transmit/receive signals with directivity. An antenna location section 1102 has a function of moving the locations of the antennas 1101-1 to 1101-12 under the instruction of an antenna control section 1113 and switches the signals received by the antennas 1101-1 to 1101-12 and outputs the signals to a transmission/reception duplexer 1103. It also switches transmission signals output from the transmission/reception duplexer 1103 and outputs the signals to the antennas 1101-1 to 1101-12. Details of the operation of the antenna location section 1102 will be described later.

The transmission/reception duplexer 1103 applies predetermined radio reception processing (down-conversion, etc.) to received signals, outputs the signals to a despreading section 1104 and applies predetermined radio reception processing (up-conversion, etc.) to signals output from a spreading section 1109 and outputs the signals.

The despreading section 1104 generates a spreading code instructed from a code switching section 1110, performs despreading processing on the signal output from the transmission/reception duplexer 1103 and outputs the despread signal to a path search section 1105 and a direction of arrival detection section 1111. The path search section 1105 selects (searches) a signal with strong reception intensity (path) from among the signals output from the despreading section 1104 and outputs the signal to a RAKE combining section 1106. The RAKE combining section 1106 RAKE-combines the signals output from the path search section 1105 and outputs the RAKE-combined signal to a switching section 1107.

Under the instruction of an antenna control section 1113, the switching section 1107 switches between the outputs of the RAKE combining section 1106 as each mobile station (MS) moves within a cell, sends them to an upper station and switches signals sent from the upper station and outputs them to a modulation section 1108.

The modulation section 1108 modulates the signal output from the switching section 1107 and outputs the modulated signal to a spreading section 1109. The spreading section 1109 generates a spreading code instructed from the code switching section 1110, performs spreading processing on the signal output from the modulation section 1108 and outputs the signal to the transmission/reception duplexer 1103.

However, in the above-described configuration, there are as many transmission/reception duplexers 1103 as sectors and there are as many despreading sections 1104, path search sections 1105, RAKE combining sections 1106, modulation sections 1108 and spreading sections 1109 as mobile stations that can be accommodated by each sector.

The code switching section 1110 is given information on a mobile station received at each antenna from the antenna location section 1102 and switches between spreading codes to be used at the despreading section 1104 and spreading section 1109 based on this information. The direction of arrival detection section 1111 detects directions of mobile stations in each sector from the output of the despreading section 1104 using, for example, the direction of arrival estimation technology used by an adaptive array antenna. A traffic detection section 1112 detects the number of mobile stations (traffic) in each sector from the output of the direction of arrival detection section 1111 using, for example, the direction of arrival estimation technology used by an adaptive array antenna. The antenna control section 1113 controls the antenna location section 1102 so that the antennas move adaptively based on the information output from the traffic detection section 1112.

The operations of the direction of arrival detection section 1111, traffic detection section 1112, antenna control section 1113 and antenna location section 1102 will be explained in detail later.

Then, the flow of a signal transmitted/received by the base station apparatus in the above-described configuration will be explained.

The signals received from the antennas 1101-1 to 1101-12 are passed through the antenna location section 1102, subjected to radio reception processing at the transmission/reception duplexer 1103, despread by the despreading section 1104, subjected to a path search by the path search section 1105, RAKE-combined by the RAKE combining section 1106, passed through the switching section 1107 and sent to an upper station.

On the other hand, a signal sent from the upper station is passed through the switching section 1107, modulated by the modulation section 1108, spread by the spreading section 1109, subjected to radio transmission processing by the transmission/reception duplexer 1103, passed through the antenna location section 1102 and sent from the antennas 1101-1 to 1101-12 to each mobile station.

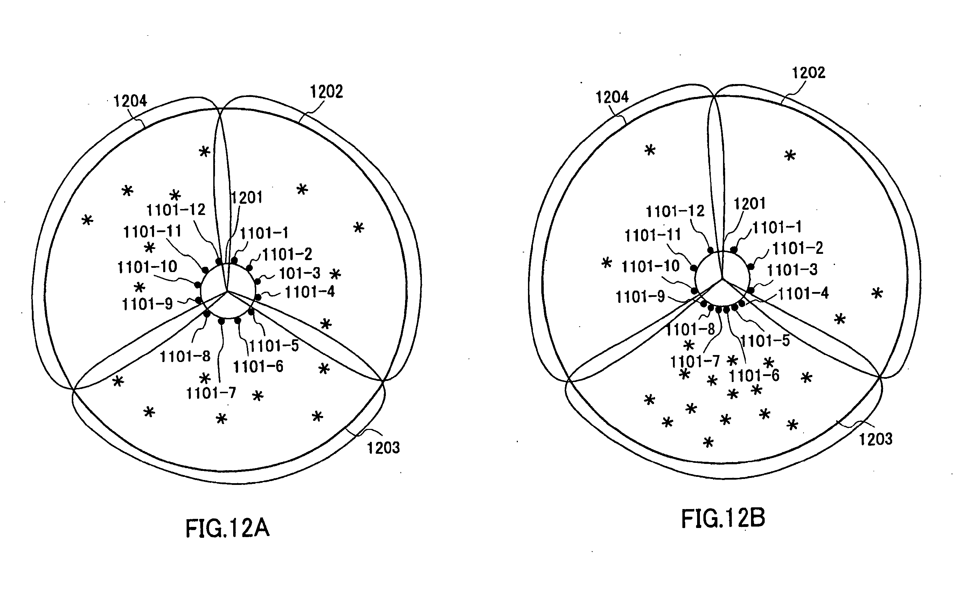

Then, the operations of the direction of arrival detection section 1111, traffic detection section 1112, antenna control section 1113 and antenna location section 1102 will be explained more specifically using FIG.12A and FIG.12B.

In FIG.12A, suppose the base station 1201 has the antennas 1101-1 to 1101-12 shown in FIG.11, the antennas 1101-1 to 1101-4 are currently in charge of the sector 1202, the antennas 1101-5 to 1101-8 are in charge of the sector 1203 and the antennas 1101-9 to 1101-12 are in charge of the sector 1204. Marks* denote mobile stations in the middle of communication.

Then, when the direction of arrival detection section 1111 and traffic detection section 1112 detect an increase of traffic (more specifically, the direction and amount in which mobile stations are densely located) within the sector 1203, when, for example, the amount of traffic detected by the traffic detection section 1112 exceeds a predetermined threshold, the antenna control section 1113 instructs the antenna location section 1102 to increase the number of antennas in charge of the sector 1203 to 6, for example. The number of antennas in charge of the sector is determined according to the amount of traffic of the sector 1203. In this way, the correspondence between the mobile stations and the antennas 1101-1 to 1101-12 is changed.

The antenna location section 1102 mechanically moves the antennas 1101-4 and 1101-9 to the sector 1203 so as to satisfy the number of antennas specified by the antenna control section 1113 as shown in FIG.12B. It also moves other antennas so that the antennas are uniformly distributed among sectors. In this way, in the cell in FIG.12B, the three antennas 1101-1 to 1101-3 handle the sector 1202, six antennas 1101-4 to 1101-9 handle the sector 1203 and three antennas 1101-10 to 1101-12 handle the sector 1204.

Thus, mechanically moving antennas and assigning more antennas to a sector where mobile stations are densely located allows sectors to use resources of the base station averagely and increases the channel capacity of the system. Furthermore, densely locating antenna elements shortens distances between the antenna elements, causes the width of the directional beam to become narrower, improves the interference suppression effect and improves transmission/reception performance.

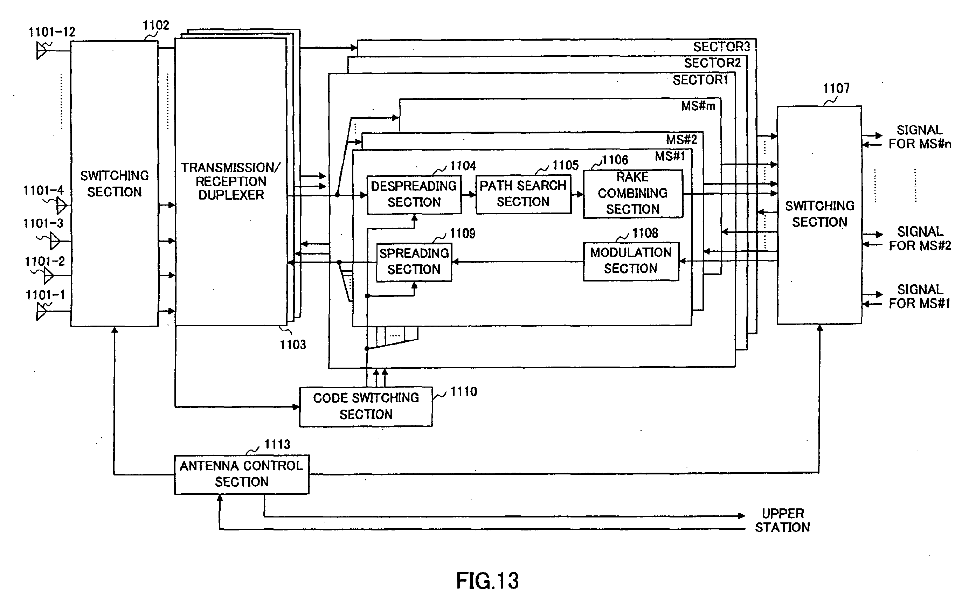

In FIG.11, the directions and number of mobile stations (traffic) in each sector are detected by the direction of arrival detection section 1111 and traffic detection section 1112, but as shown in FIG.13, it is also possible to adopt a mode in which traffic of each mobile station is detected based on control information supplied from an upper station, for example, an RNC (Radio Network Controller).

Furthermore, in FIG.12A and FIG.12B, the case where antennas are distributed uniformly within a sector has been explained as an example, but in a case where antennas are AAA in substantially the same configuration as that described above, it is possible to detect the direction in which each mobile station exists and therefore it is also possible to adopt a mode in which antennas are locally located densely according to the degree of density of mobile stations within the sector.

Furthermore, this embodiment has described the case where a distribution of load on the communication system is decided based on the number of mobile stations in the middle of communication within the sector as an example, but it is also possible to decide the distribution of load on the communication system based on the amount of communication within the sector, the amount of resources of the base station used, the number of spreading codes used.

### (Embodiment 5)

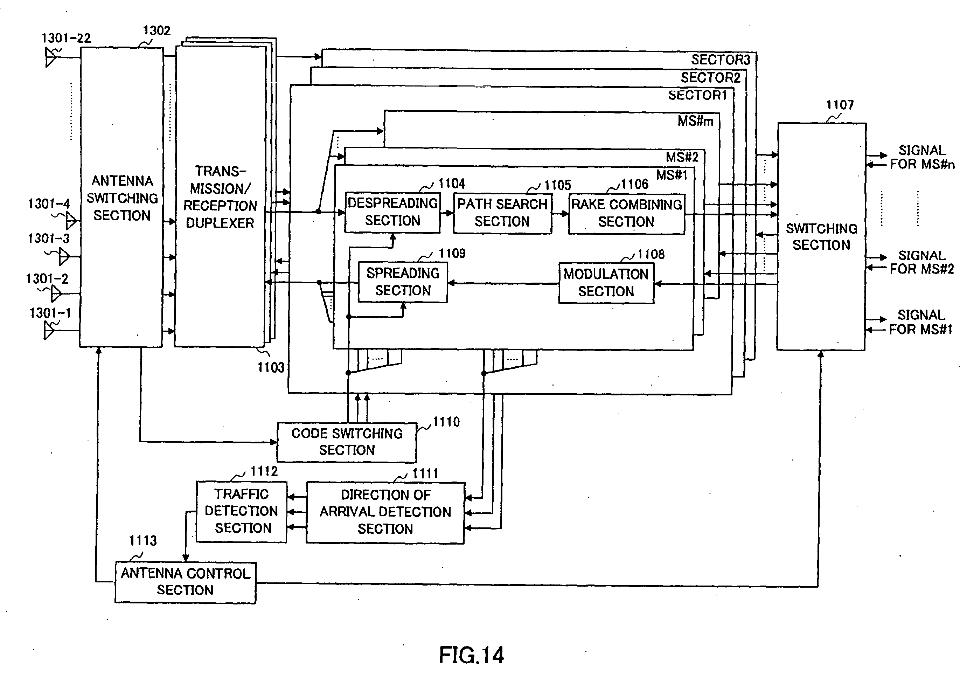

FIG.14 is a block diagram showing an example of a configuration of a base station apparatus according to Embodiment 5 of the present invention. This base station apparatus has a basic configuration similar to that of the base station apparatus shown in FIG.11, and so the same components are assigned the same reference numerals and explanations thereof will be omitted.

A feature of this embodiment is that more antennas (antennas 1301-1 to 1301-24) than the antennas of the base station apparatus shown in FIG.11 are installed and an antenna switching section 1302 is provided.

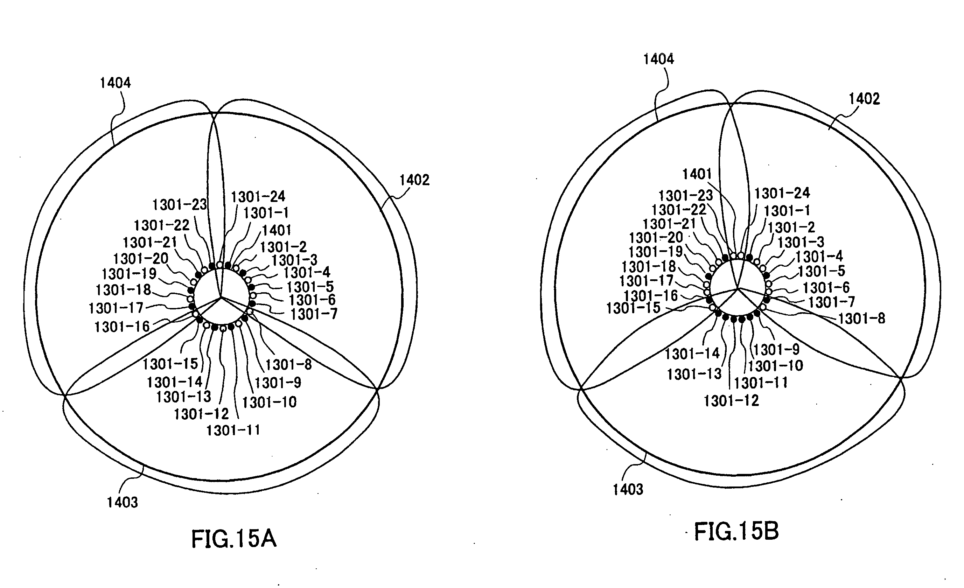

The operations of a direction of arrival detection section 1111, traffic detection section 1112, antenna control section 1113 and antenna switching section 1302 will be explained more specifically using FIG.15A and FIG.15B.

In FIG.15A, a base station 1401 has the antennas 1301-1 to 1301-24 shown in FIG.14 and these antennas are spaced uniformly and fixed. Of the 24 antennas, antennas in use are indicated with black bullets and antennas not in use are indicated with white bullets. These antennas can be electrically switched ON/OFF.

Currently, suppose the antennas 1301-1, 1301-3, 1301-5 and 1301-7 are in charge of a sector 1402, antennas 1301-9, 1301-11, 1301-13 and 1301-15 are in charge of a sector 1403, antennas 1301-17, 1301-19, 1301-21 and 1301-23 are in charge of a sector 1404.

Then, when the direction of arrival detection section 1111 and traffic detection section 1112 detect an increase of traffic within the sector 1403, the antenna control section 1113 instructs the antenna switching section 1302 to increase the number of antennas in charge of the sector 1403 to 6, for example. The number of antennas in charge of the sector is determined according to the amount of traffic of the sector 1403.

The antenna switching section 1302 switches between antenna elements used as shown in FIG. 15B so as to satisfy the number of antennas specified by the antenna control section 1113. In the cell in FIG.15B, suppose three antennas 1301-1, 1301-4 and 1301-7 handle the sector 1402, six antennas 1301-9 to 1301-14 handle the sector 1403, three antennas 1301-16, 1301-19 and 1301-22 handle the sector 1404.

In this way, controlling ON/OFF of antennas in such a way that more antennas are assigned to a sector where mobile stations are densely located allows sectors to use resources of the base station averagely and increases the channel capacity of the system. Furthermore, locating antenna elements densely shortens distances between the antenna elements, causes the width of a directional beam to become narrower naturally, and can thereby improve the interference suppression effect and improve transmission/reception performance.

In FIG.14, the directions and the number of mobile stations (traffic) within each sector are detected by the direction of arrival detection section 1111 and traffic detection section 1112, but it is also possible to adopt a mode in which traffic of each mobile station is detected based on control information supplied from an upper station, for example, an RNC (Radio Network Controller).

Furthermore, in FIG. 15A and FIG. 15B, the case where antennas are distributed uniformly within a sector has been explained as an example, but in a case where antennas are AAA in substantially the same configuration as that described above, it is possible to detect the direction in which each mobile station exists, and therefore it is also possible to adopt a mode in which antennas are locally located densely according to the degree of density of mobile stations within the sector.

This embodiment has described the case where the antenna positions are switched based on the number of mobile stations in the middle of communication within a sector as an example, but it is also possible to implement the present invention based on the amount of communication within the sector and amount of resources of the base station used.

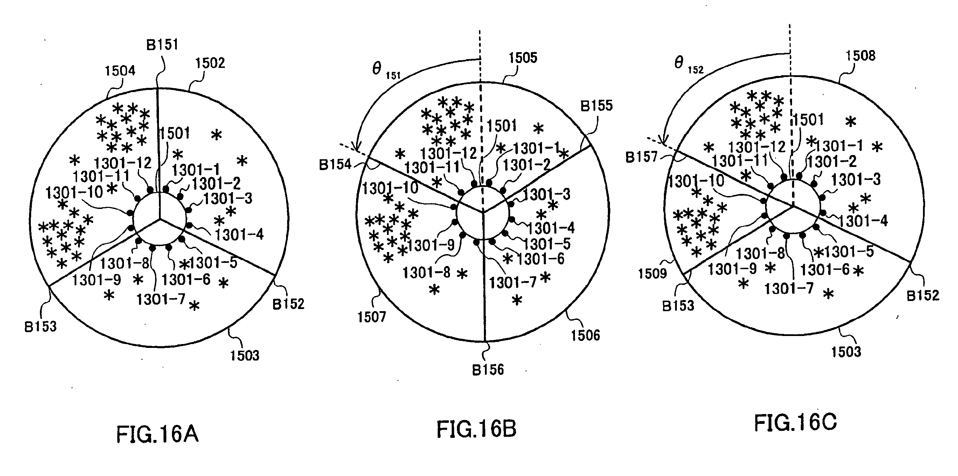

Furthermore, the following operation is also possible in a configuration substantially the same as that described above. As shown in FIG.16A, a cell under the control of abase station 1501 consists of three sectors (sectors 1502 to 1504) having an equal area. Here, the base station 1501 has the antennas 1301-1 to 1301-12 shown in FIG.14 and all of them are in use (ON). The boundary (hereinafter referred to as "sector boundary") between the sector 1502 and sector 1503 is B152, the sector boundary between the sector 1503 and sector 1504 is B153 and the sector boundary between the sector 1504 and sector 1502 is B151.

In FIG.16A, there are two places in the sector 1504 where mobile stations are densely located showing a situation that the load on the communication system is weighted heavily toward the sector 1504 alone in this cell. Therefore, as shown in FIG.16B, all the three sector boundaries B151 to B153 are rotated by angle θ ₁₅₁ to form sector boundaries B154 to B156 so that the sectors 1502 to 1504 are rotated to become sectors 1505 to 1507 respectively. This angle θ ₁₅₁ is set, for example, to an angle that divides the area where traffic is intense into two portions. This operation can be realized when the antenna switching section 1302 shown in FIG.14 switches between input/output.

In this way, the area where mobile stations are densely located is divided into the sector 1505 and sector 1507 allowing the load on the communication system to be distributed.

Furthermore, as shown in FIG.16C, it is also possible to rotate only the sector boundary B151 in FIG.16A by angle θ ₁₅₂ to form a sector boundary B157 and divide the area where mobile stations are densely located into a newly formed sector 1508 and sector 1509.

The changes of the sector boundaries shown in FIG. 16A to FIG.16C can also be realized by mechanically moving antennas as shown in Embodiment 4.

### (Embodiment 6)

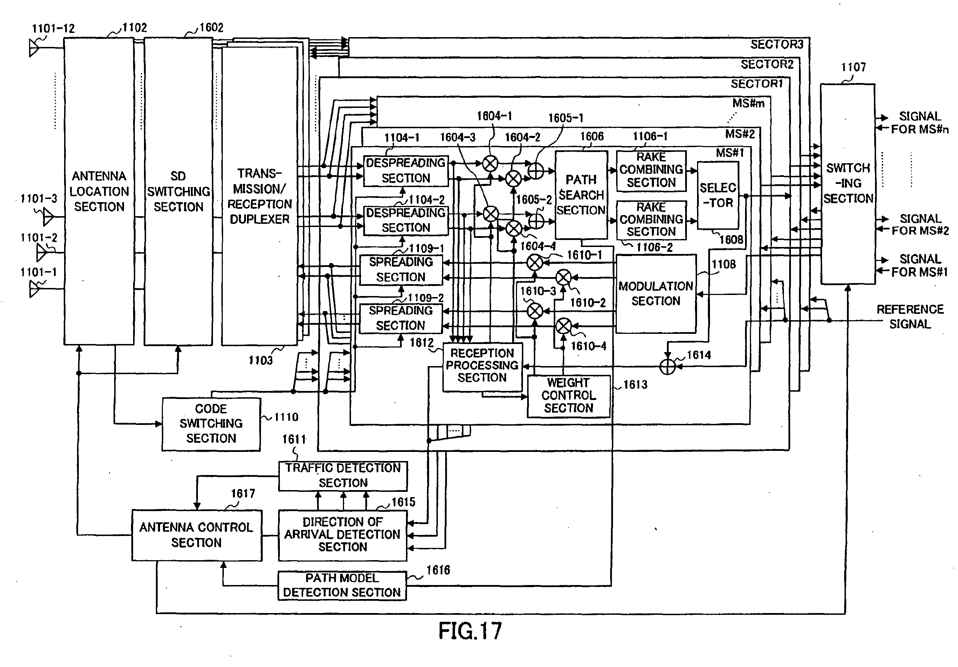

FIG.17 is a block diagram showing an example of a configuration of a base station apparatus according to Embodiment 6 of the present invention. This base station apparatus has a basic configuration similar to that of the base station apparatus shown in FIG.11, and so the same components are assigned the same reference numerals and explanations thereof will be omitted. For example, despreading sections 1104-1 and 1104-2 indicate that there are two sections having the same function as that of the despreading section 1104 shown in FIG.11.

A feature of this embodiment is that one mobile station is provided with two systems of spreading, despreading and RAKE combining sections, etc., and the two systems are used simultaneously to perform space diversity (hereinafter referred to as "SD") transmission/reception or realize AAA transmission/reception using only one system depending on the load on the communication system or situation of the propagation path.

The traffic detection section 1611 detects traffic for each mobile station using information output from a direction of arrival detection section 1615. An antenna control section 1617 decides the load on the communication system according to information output from the traffic detection section 1611, decides the situation of the propagation path based on information output from a path model detection section 1616 and based on this load and the situation of the propagation path, instructs the respective components to use the two systems simultaneously to perform space diversity (hereinafter referred to as "SD") transmission/reception when, for example, the load is equal to or lower than a predetermined threshold or use only one system to perform AAA transmission/reception when the load is higher than the threshold.

First, the operations of the respective components when the antenna control section 1617 has issued an instruction of AAA transmission/reception will be explained. In this case, the system of despreading section 1104-2 to RAKE combining section 1106-2, and multipliers 1610-3, 1610-4 to spreading section 1109-2 is not used and an SD switching section 1602 and selector 1608 output the input signals as they are without performing any switching. The principal flow of a transmission/received signal is the same as that in Embodiment 4, but the signal output from a despreading section 1104-1 is multiplied at multipliers 1604-1 and 1604-2 by a weight of AAA control output from a reception processing section 1612 and the signal output from a modulation section 1108 is multiplied at multipliers 1610-1 and 1610-2 by a weight output from a weight control section 1613.

A reception processing section 1612 calculates a weight for AAA control based on an error signal generated by an adder 1614 in such a way that a mean square error between a reference signal and received signal becomes a minimum and outputs the weight to the multipliers 1604-1 and 1604-2. In this processing process, the reception processing section 1612 can decide whether each mobile station is in the middle of communication or in which direction each mobile station is located, and therefore the reception processing section 1612 outputs information on this mobile station to the direction of arrival detection section 1615. The calculated weight can also be used to calculate a weight to be multiplied on a transmission signal, and so it is also output to the weight control section 1613.

The weight control section 1613 calculates a weight to be multiplied on the transmission signal based on the weight output from the reception processing section 1612. The weights calculated by the weight control section 1613 are output to the respective multipliers 1610-1 and 1610-2.

Then, the operations of the respective components when the antenna control section 1617 issues an instruction of SD transmission/reception will be explained. In this case, the reception processing section 1612 and weight control section 1613 are not used and the multipliers 1604-1 to 1604-4, 1610-1 to 1610-4, and adders 1605-1 and 1605-2 output the input signals as they are without applying any processing thereto.

The SD switching section 1602 under the instruction of the antenna control section 1617 divides a plurality of antennas in charge of a sector into two blocks and switches between input/output so that the transmission/received signal is distributed to their respective despreading and spreading systems. The despreading sections 1104-1 and 1104-2 each despread the signals received from the antennas of their respective blocks and output the despread signals to the path search section 1606. Of the received signals output from the despreading sections 1104-1 and 1104-2, the path search section 1606 selects (searches) the signals (path) with greater reception intensity and outputs them to the RAKE combining sections 1106-1 and 1106-2. The RAKE combining sections 1106-1 and 1106-2 RAKE-combine the signals output from the path search section 1606 and output the combined signals to the selector 1608. Under the instruction of the antenna control section 1617, the selector 1608 switches between the received signals of the two systems output from the RAKE combining sections 1106-1 and 1106-2 and outputs them.

On the other hand, the transmission signal output from themodulation section 1108 is spreadby the spreading sections 1109-1 and 1109-2 and output to the SD switching section 1602 through the transmission/reception duplexer 1103.

Then, the features of the operation of the base station apparatus in the above-described configuration will be explained.

Generally, the AAA technology for carrying out directional beam transmission/reception carries out narrow beam transmission/recept ion and can thereby obtain considerable interference suppression effects, but cannot obtain diversity effects on fading. On the other hand, the SD technology can obtain diversity effects on facing, but cannot obtain interference suppression effects.

There is a description in the NTT DoCoMo Technical Journal (Vol.9 No.4 Jan.2002) "W-CDMA Technology (No.6 Link Capacity Expansion Technology for W-CDMA)" p.58 about influences on a system capacity in a system having an AAA function when AAA transmission/reception is carried out using a plurality of antennas as one block and when transmission/reception and SD transmission/reception are carried out simultaneously with the plurality of antennas divided into equal halves in two blocks.

According to document, it is understandable that both SD transmission/reception and AAA transmission/reception are used concurrently in the case of a propagation environment in which transmission/reception is carried out with a small number of paths, and on the contrary only AAA transmission/reception is used in the case of a propagation environment in which transmission/reception is carried out with many paths, and in this way it is possible to reduce required transmission Eb/No for the number of communication users, that is, transmit power.

Furthermore, it is likewise understandable that by using SD transmission/reception and AAA transmission/reception concurrently or only using AAA transmission/reception when the number of communication users is large or small, that is, when the load on the communication system is large or small, respectively, it is possible to reduce required transmission Eb/No for the number of communication users, that is, transmit power.

Thus, based on the information detected from the path model detection section 1616 and traffic detection section 1611, in the case of a propagation environment where, for example, transmission/reception is performed with 2 or 3 paths, it can be said to be appropriate to perform switching according to traffic such as adopting only AAA transmission/reception when the number of communication users is 40 or smaller or concurrent use of SD transmission/reception and AAA transmission/reception when the number of communication users is more than 40.

This embodiment provides a configuration for deciding load on the communication system and propagation situation, and can thereby provide an apparatus for automatically executing the above-described points of observation.

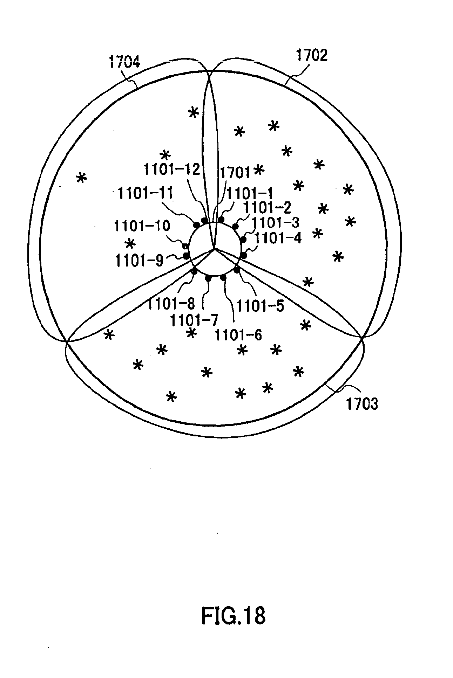

FIG.18 illustrates an example of a configuration of a cell controlled by the base station apparatus according to this embodiment. AAA transmission/reception is being carried out in sectors 1702 and 1703 where mobile stations are densely located using antennas 1101-1 to 1101-4 and antenna 1101-5 to 1101-8 respectively, while AAA+SD transmission/reception is being carried out in a sector 1704 where the number of mobile station is small using antennas 1101-9, 1101-10, 1101-11 and 1101-12.

Furthermore, according to this embodiment, the distance between antenna elements (blocks) can be lengthened by moving the antenna elements themselves as shown in FIG.18, and therefore it is also possible to improve a macro diversity effect on long cycle variations.

Thus, this embodiment can switch between use of only AAA transmission/reception and concurrent use of SD transmission/reception and AAA transmission/reception depending on the load on the communication system, and can thereby improve transmission/reception performance.

This embodiment has described the case where the antenna positions are changed by mechanically moving the antennas as an example, but the antenna positions can also be changed by electrical switching as shown in Embodiment 5.

As described above, the present invention can reduce the number of mobile stations in the middle of communication in an SHO area and allows the base station to reduce the load of SHO control, increase the channel capacity of the system and allows the mobile stations to reduce downlink interference.

Furthermore, the present invention can use resources of the base station efficiently and increase the channel capacity of the system. Furthermore, it can also form beams according to unbalanced traffic and improve transmission/reception performance.

According to the present invention, the amount of traffic can be calculated based on, for example, the number of mobile stations in the middle of communication or the amount of resources, etc., used by the base station for communications with mobile stations.

According to an aspect of the present invention, the base station apparatus comprises a detection section which detects load on the communication system in an area where a mobile station carries out handover between sectors and an updating section which updates the position of a boundary between sectors when the load detected by the detection section is equal to or greater than a predetermined value.

According to this configuration, the boundary between sectors is moved in such a way that the load on the communication system in the SHO area is reduced and it is thereby possible to reduce the load on the communication system in the SHO area and increase the channel capacity of the system.

According to another aspect of the present invention, the detection section of the base station apparatus in the above-described configuration detects the load on the communication system using the amount of communication of the communication system in the area where handover takes place between sectors.

According to this configuration, the load on the communication system is detected using the amount of communication in the SHO area, allowing both mobile stations and base station to detect the load on the communication system and increase the degree of freedom in implementing the present invention.

According to a further aspect of the present invention, the detection section of the base station apparatus in the above-described configuration detects the load on the communication system based on the amount of resources of the base station used for handover between sectors.

According to this configuration, the load on the communication system is detected based on the amount of resources of the base station used for SHO, and it is thereby possible to directly calculate the load of the base station and improve the accuracy of sector control of the present invention.

According to a still further aspect of the present invention, the detection section of the base station apparatus in the above-described configuration detects the load on the communication systemby counting the number of mobile stations in the middle of communication in the area where handover takes place between sectors.

According to this configuration, the load on the communication system is detected by counting the number of mobile stations in the middle of communication in the SHO area, and it is thereby possible to use the functions of the current apparatus when detecting the load on the communication system and easily implement the present invention.

According to a still further aspect of the present invention, the updating section of the base station apparatus in the above-described configuration rotates sectors centered on the base station and thereby updates the positions of the boundaries between sectors.

According to this configuration, the boundaries between sectors are moved in such a way that sectors are rotated, and it is thereby possible to implement the present invention with the same sector configuration as the current configuration and easily implement the present invention.

According to a still further aspect of the present invention, the updating section of the base station apparatus in the above-described configuration updates the position of one boundary between sectors.

According to this configuration, the position of one boundary between sectors is moved, and it is thereby possible to minimize the number of mobile stations affected by the change of the SHO area and increase the channel capacity of the system.

According to a still further aspect of the present invention, the updating section according to any one of the above-described base station apparatuses updates the positions of boundaries between sectors by switching between sector antennas making up each sector.

According to this configuration, the boundaries between sectors are moved by switching between sector antennas making up each sector, and it is thereby possible to implement the present invention by a simple addition of components and make control easier.

According to a still further aspect of the present invention, the updating section according to any one of the above-described base station apparatuses updates the positions of boundaries between sectors by changing directivities of antennas used for transmission/reception.

According to this configuration, the boundaries between sectors are moved by changing directivities of antennas, and it is thereby possible to use the current apparatus and easily implement the present invention.

According to a still further aspect of the present invention, any one of the above-described base station apparatuses includes an estimation section which estimates the load on the communication system in an area where a mobile station carries out handover between sectors after the positions of the boundaries between sectors have been updated and the updating section updates the positions of boundaries between sectors based on the load on the communication system estimated by the estimation section in such a way that the load on the communication system becomes more uniform in each sector.

According to this configuration, the boundaries between sectors are moved by estimating the load on the communication system after the boundaries between sectors have been moved in such a way that the load on the communication system becomes more uniform, and it is thereby possible to increase the channel capacity of the system.

According to a still further aspect of the present invention, the detection section in the above-described base station apparatus discovers areas where the load on the communication system is concentrated based on the detected load on the communication system and the updating section updates the positions of boundaries between sectors so that the center of the area discovered by the discovering section becomes the center of the sector.

According to this configuration, boundaries between sectors are moved in such a way that the center of the area where the load on the communication system is concentrated becomes the center of the sector, and it is thereby possible to prevent frequent movements of boundaries between sectors and increase the channel capacity of the system.

According to a still further aspect of the present invention, the base station apparatus comprises a detection section which detects the distribution of load on the communication system in a cell and a location section which adaptively locates more antenna elements in a sector where mobile stations are densely located based on the distribution of load on the communication system detected by the detection section.

According to this configuration, antenna elements are located based on the distribution of load on the communication system in the cell, and it is thereby possible to efficiently use resources of the base station and increase the channel capacity of the system.

According to a still further aspect of the present invention, the location section of the base station apparatus in the above-described configuration adaptively locates the antenna elements by mechanically moving the antenna elements.

According to this configuration, the antenna elements are located through a mechanical movement, and it is thereby possible to perform fine adjustment of their positions and locate the antenna elements flexibly.

According to a still further aspect of the present invention, the location section of the base station apparatus in the above-described configuration adaptively locates more than a desired number of antenna elements, switches use/non-use of the antennas by electrically switching ON/OFF.

According to this configuration, the antenna elements are electrically switched, and it is thereby possible to quickly switch the locations of antennas and respond to abrupt unbalancing of traffic.

According to a still further aspect of the present invention, the base station apparatus comprises a detection section which detects a distribution of load on the communication system in a cell and an updating section which updates the positions of boundaries between sectors based on the distribution of load on the communication system detected by the detection section, wherein the updating section updates the positions of boundaries between sectors by rotating the sectors centered on the base station.

According to this configuration, the positions of boundaries between sectors are updated based on the distribution of load on the communication system in the cell and sectors are rotated centered on the base station, and it is thereby possible to assign resources of the system uniformly without changing the area of the sector and immediately implement the present invention in an exiting system.

According to a still further aspect of the present invention, the base station apparatus comprises a detection section which detects a distribution of load on the communication system in a cell and an updating section which updates the positions of boundaries between sectors based on the distribution of the load on the communication system detected by the detection section, wherein the updating section updates the position of one boundary between sectors.

According to this configuration, the position of one boundary between sectors is moved based on the distribution of the load on the communication system in the cell, and it is thereby possible to minimize the mobile stations to be influenced by the movement of the position of the boundary between sectors and maintain a stable communication system.

According to a still further aspect of the present invention, the base station apparatus comprises a detection section which detects the load on the communication system within a sector and a transmission/reception section which performs transmission/reception by adaptively changing the antenna element configuration in such a way that the antennas operate the antenna elements only as an adaptive array or a combination of an adaptive array and space diversity depending on the load on the communication system detected by the detection section.

According to this configuration, either use of only an adaptive array technology or concurrent use of the adaptive array technology and space diversity technology can be selected according to the load on the communication system within the sector, and it is thereby possible to select an optimum transmission/reception method and improve the transmission/reception quality.

According to a still further aspect of the present invention, the base station apparatus comprises a detection section which detects the propagation situation within a sector and a transmission/reception section which performs transmission/reception by adaptively changing the antenna element configuration in such a way that the antennas operate the antenna elements only as an adaptive array or a combination of an adaptive array and space diversity depending on the propagation path detected by the detection section.

According to this configuration, either use of only an adaptive array technology or concurrent use of the adaptive array technology and space diversity technology can be selected according to the propagation path within the sector, and it is thereby possible to select an optimum transmission/reception method and improve the transmission/reception quality.

According to a still further aspect of the present invention, the detection section of the base station apparatus in the above-described configuration detects a distribution of load on the communication system using the amount of communication of the communication system in a cell and the direction of arrival of the received signal.

According to this configuration, the direction of arrival of the received signal can be easily estimated through AAA or controlled by an upper station beforehand, and it is thereby possible to easily detect the distribution of the load on the communication system.

According to a still further aspect of the present invention, the detection section of the base station apparatus in the above-described configuration detects a distribution of load on the communication system based on the amount of resources of the base station used for communication and the direction of arrival of the received signal.

According to this configuration, the load on the communication system is detected based on the amount of resources of the base station used for communication, and it is thereby possible to directly calculate load of the base station and improve the detection performance of the load on the communication system.

According to a still further aspect of the present invention, the detection section of the base station apparatus in the above-described configuration detects a distribution of load on the communication system by counting the number of mobile stations in the middle of communication in a cell and detecting the direction of arrival of the received signal.

According to this configuration, the distribution of load on the communication system is detected from the number of mobile stations in the middle of communication and the direction of arrival of the received signal, and it is thereby possible to use an existing apparatus and easily implement the present invention.

This application is based on the Japanese Patent Application No. 2002-080993 filed on March 22, 2002 and the Japanese Patent Application No. 2002-086114 filed on March 26, 2002, entire content of which is expressly incorporated by reference herein.

### Industrial Applicability

The present invention is applicable to a base station apparatus which controls sectors in a cell in a cellular scheme communication system.

## Claims

1. A base station apparatus comprising:
a plurality of antennas provided for sectors for transmitting/receiving signals to/from mobile stations in said sectors;
a plurality of signal processing sections provided for said sectors for performing transmission/reception processing on said signals;
a detection section which detects traffic of transmission/reception between said mobile stations and said antennas for each of said sectors; and
a sector control section which distributes said traffic, when said detected traffic is equal to or greater than a certain value, by changing the correspondence between said mobile stations and said antennas or the correspondence between said antennas and said signal processing sections.

2. The base station apparatus according to claim 1,
wherein said detection section detects said traffic in the handover area between said neighboring sectors,
when said detected traffic is equal to or greater than a certain value, said sector control section accommodates said mobile stations in said handover area in either of said neighboring sectors.

3. The base station apparatus according to claim 1,
wherein said sector control section changes complex weights used to form said sectors and accommodates said mobile stations in a sector different from the sector before the change.

4. The base station apparatus according to claim 1,
wherein said sector control section electrically switches the correspondence between said antennas and said signal processing sections and assigns said antennas to said signal processing sections different from the signal processing sections before the change.

5. The base station apparatus according to claim 1,
wherein said sector control section assigns said antennas to said signal processing sections different from the signal processing sections before the change by mechanically moving said antennas.

6. The base station apparatus according to claim 1,
wherein said sector control section increases the number of said antennas corresponding to a sector where said traffic is equal to or greater than a certain value by selecting antennas to be used through electrical switching compared to the number of antennas before the change.

7. The base station apparatus according to claim 1,
wherein said sector control section increases the number of said antennas corresponding to a sector where said traffic is equal to or greater than a certain value by mechanically moving said antennas compared to the number of antennas before the change.

8. The base station apparatus according to claim 1,
wherein said sector control section causes adaptive array communication to be carried out in a sector where said traffic is equal to or greater than a certain value and causes adaptive array communication and space diversity communication to be carried out concurrently in a sector where said traffic is smaller than the certain value.

9. A sector control method used by a base station apparatus provided with a plurality of antennas provided for sectors for transmitting/receiving signals to/from mobile stations in said sectors and a plurality of signal processing sections provided for said sectors for performing transmission/reception processing on said signals, comprising:
a detecting step of detecting traffic of transmission/reception between said mobile stations and said antennas for each of said sectors; and
a sector controlling step of distributing said traffic, when said detected traffic is equal to or greater than a certain value, by changing the correspondence between said mobile stations and said antennas or the correspondence between said antennas and said signal processing sections.
